# EUROPÄISCHE PATENTSCHRIFT

(11) **EP 3 117 201 B1**
(45) Veröffentlichungstag und Bekanntmachung des Hinweises auf die Patenterteilung: **16.05.2018**
(21) Anmeldenummer: 15711081.8
(22) Anmeldetag: 10.03.2015
(51) Int. Cl.: G01B 11/275, G01M 17/06, G01M 17/04

(54) **VERFAHREN UND VORRICHTUNG ZUM ÜBERPRÜFEN DER RADAUFHÄNGUNG EINES FAHRZEUGS**
METHOD AND DEVICE FOR CHECKING THE SUSPENSION OF A VEHICLE
PROCEDE ET DISPOSITIF POUR TESTER LA SUSPENSION D'UN VÉHICULE

(30) Priorität: 14.03.2014 DE 102014204809
(43) Veröffentlichungstag der Anmeldung: 18.01.2017
(73) Patentinhaber: Robert Bosch GmbH, 70442 Stuttgart (DE)
(72) Erfinder: PETERS, Stefanie, 64289 Darmstadt (DE); PAVLOV, Pavel, 81539 Muenchen (DE); KRUEGER, Christof, 85757 Karlsfeld (DE); GRAF, Simone, 80992 Muenchen (DE); HANNING, Tobias, 80993 Muenchen (DE)
(86) Internationale Anmeldenummer: PCT/EP2015/054890
(87) Internationale Veröffentlichungsnummer: WO 2015/135898

(56) Entgegenhaltungen:
- WO-A1-01/38843
- DE-A1- 2 948 573
- DE-A1-102006 035 924
- DE-A1-102008 042 145
- DE-A1-102012 215 754

## Beschreibung

Verfahren und Vorrichtung zum Überprüfen der Radaufhängung eines Fahrzeugs Die Erfindung betrifft ein Verfahren und eine Vorrichtung zum Überprüfen der Radaufhängung eines Fahrzeugs, insbesondere eines Kraftfahrzeugs.

### Stand der Technik

Die Radaufhängung ist das Verbindungsglied zwischen einem Rad und dem Fahrgestell eines Fahrzeugs. Die Verbindung erfolgt durch Achsen oder vergleichbare Konstruktionen, die Führung durch so genannte Lenker. In der Regel sind dies Streben, die am Fahrgestell befestigt sind und die Radaufhängung fixieren. Man unterscheidet Quer-, Schräg- und Längslenker. Bei modernen Personenkraftwagen werden heute meist Querlenker, die näherungsweise in Fahrtrichtung liegen, verwendet, um das Rad horizontal zu fixieren und eine vertikale Bewegung zuzulassen. Bei Fahrt in Fahrzeugrichtung (geradeaus) soll sich das Rad um eine feste Rotationsachse drehen, die im Wesentlichen durch den Querlenker und das Radlager festgelegt wird.

Radlager und Querlenker sind Verschleißteile, die sich abnutzen oder auch beschädigt sein können. Von außen ist eine Beschädigung oder Abnutzung eines Radlagers oder Querlenkers in der Regel visuell zu erkennen, da sie an der Innenseite der Felge befestigt sind. Insbesondere in Kurven, die zügig durchfahren werden, ertönt bei defekten oder abgenutzten Radlagern ein von der Geschwindigkeit abhängiges Störgeräusch. Ausgeschlagene Querlenker führen zu einem unruhigen Geradeauslauf, was auch als "Schwimmen des Fahrzeugs" bezeichnet wird. Durch den unrunden Lauf der Räder wird aufgrund der verminderten Standfestigkeit der Räder zudem der Rollwiderstand erhöht, wodurch sich der Kraftstoffverbrauch erhöht.

Neben dem turnusmäßigen Austausch des Verschleißteils "Radlager" werden defekte Radaufhängungen, seien es fehlerhafte Radlager oder Querlenker, bisher visuell detektiert. Ein erfahrener Mechaniker kann zudem durch Rütteln am ausgehobenen Rad auf einen Defekt schließen. Außerhalb der Inspektionsintervalle geschieht dies meist wenn aufgrund des Fahrverhaltens bei höheren Geschwindigkeiten eine entsprechende Indikation vorliegt. Unerfahrene Fahrer können aber eine solche Indikation, die bei einer Inspektion zur Feststellung eines Defekts der Radaufhängungführen würde, übersehen.

Weiterer relevanter Stand der Technik ist aus WO 01/38843 A1, DE 102006035924 A1, DE 2948573 A1 und DE 102008042145 A1 benannt.

### Technische Aufgabe

Eine Aufgabe der vorliegenden Erfindung ist es, ein Verfahren und eine Vorrichtung zum schnellen und zuverlässigen Überprüfen der Radaufhängung eines Fahrzeugs, insbesondere der Radlager und Querlenker, bereitzustellen.

### Offenbarung der Erfindung

Ein Grundgedanke der Erfindung ist das Erkennen defekter oder instabiler Radaufhängungen durch Bestimmen und Beobachten der Rotationsachse bei langsamer Geradeausfahrt. Ist die Radaufhängung defekt, etwa aufgrund eines defekten Querlenkers oder eines defekten Radlagers, lässt sich keine eindeutige Raddrehachse bestimmen oder die Raddrehachse führt undefinierte Bewegungen aus.

Erfindungsgemäß werden daher Abweichungen bei der Bestimmung der Raddrehachse als Indikator für eine defekte Radaufhängung genutzt.

Ein erfindungsgemäßes Verfahren zum Überprüfen der Radaufhängung eines Fahrzeugs, insbesondere eines Kraftfahrzeugs, umfasst die Schritte:
(A) Bestimmen der Radnormalen und/oder des Rotationszentrums wenigstens eines Rades des Fahrzeugs;
(B) Bewegen des Fahrzeugs und, insbesondere optisches, Erfassen von Punkten der Bewegungstrajektorie der Radnormalen und/oder des Rotationszentrums bei der Bewegung des Fahrzeugs;
(C) Bestimmen der Abweichung der im Schritt (B) bestimmten Bewegungstrajektorie der Radnormalen und/oder des Rotationszentrums von einer vorgegebenen Bewegungstrajektorie; und
(D) Ausgeben einer Fehlermeldung, wenn die Abweichung einen vorgegebenen Grenzwert überschreitet.

Eine erfindungsgemäße Vorrichtung zum Überprüfen der Radaufhängung eines Fahrzeugs, insbesondere eines Kraftfahrzeugs umfasst:
(a) eine Vorrichtung zum Bestimmen der Radnormalen und/oder des Rotationszentrums eines Rades des Fahrzeugs;
(b) eine Vorrichtung zum, insbesondere optischen, Erfassen der Bewegungstrajektorie der Radnormalen und/oder des Rotationszentrums des Rades bei einer Bewegung des Fahrzeugs; und
(c) eine Vergleichs- und Auswertevorrichtung, die ausgebildet ist, die erfasste Bewegungstrajektorie der Radnormalen und/oder des Rotationszentrums des Rades mit einer vorgegebenen Bewegungstrajektorie zu vergleichen und eine Fehlermeldung auszugeben, wenn die Abweichung der erfassten Bewegungstrajektorie von der vorgegebenen Bewegungstrajektorie einen vorgegebenen Grenzwert überschreitet.

Die Rotationsachse bzw. das Rotationszentrum eines Rades lässt sich aus der Beobachtung des rollenden Rades ableiten. Dabei nimmt man an, dass das Abrollverhalten des Rades hinreichend genau durch die Rollkurven eines Kreises (Zykloide) modelliert werden kann.

Während des Abrollprozesses werden ein oder mehrere Punkt des Rades und/oder eines mit dem Rad verbundenen Messtargets beobachtet. Ist p(T) die Position eines Punktes zum Zeitpunkt T, so ist p(t) die Kurve einer Zykloiden, aus der das Rotationszentrum des abrollenden Rades bestimmt werden kann. Daraus lässt sich dann die Raddrehachse ermitteln.

Alternativ oder zusätzlich kann die Raddrehachse durch ein bekanntes statisches Achsmessverfahren, in dem die Spur und der Sturz des Rades ermittelt werden, bestimmt werden.

Wird jeder Beobachtung des Rades eine Normale senkrecht zur jeweiligen Ebene des Rades ("Radnormale") zuordnet, bilden diese Radnormale im Idealfall einen Kegel bzw. nach der Projektion auf eine Ebene, die parallel zur Ebene des Rades ausgerichtet ist, einen Kreis.

Nachdem dieser Kreis bestimmt worden ist, lässt sich auf eine defekte Radaufhängung schließen, wenn das Ausmaß der Abweichung der Punkte der Zykloide p(t) von diesem Kreis einen vorgegebenen Wert überschreitet. Bei dem Verfahren der Ermittlung der Rotationsachse über die Radnormale kann aus einer Abweichung der Bewegung der Radnormalen von der idealen Kegelform, die signifikant größer als das Rauschen der Einzelmessung ist, auf eine defekte Radaufhängung geschlossen werden.

Um das Ausmaß der Abweichung zu bestimmen, kann das Verfahren einschließen, die Summe der Abstände der Punkte p(t) der Zykloide von dem Kreis zu bestimmen und eine Fehlermeldung auszugeben, wenn die Summe und/oder die Anzahl der Punkte einen vorgegebenen Grenzwert überschreitet.

Alternativ oder zusätzlich kann die Anzahl der Punkte p(Tᵢ), die mehr als einen vorgegebenen Abstand von dem Kreis haben, bestimmt und eine Fehlermeldung ausgegeben werden, wenn die Summe und/oder die Anzahl der Punkte p(Tᵢ) einen vorgegebenen Grenzwert überschreitet.

Das Verfahren kann auch einschließen, mit bekannten mathematischen Methoden eine Passkurve, die durch alle Punkte der Zykloide p(t) verläuft, zu bestimmen, die Krümmung der Passkurve zu ermitteln und mit der Krümmung des Kreises zu vergleichen, um eine Fehlermeldung auszugeben, wenn die Differenz zwischen der Krümmung der Passkurve und der Krümmung des Kreises einen vorgegebenen Grenzwert überschreitet.

Durch einzelne oder eine Kombination dieser Verfahren kann das Ausmaß der Abweichung zuverlässig bestimmt werden.

Zusätzlich kann aus der Art und/oder dem Ausmaß der Abweichung auf die Art des Fehlers der Radaufhängung geschlossen werden und es können Vorschläge für weitere Diagnose- und/oder Reparaturschritte gemacht werden.

Da im Rahmen einer Achsvermessung in der Regel die Rotationsachse der Rädern bestimmt wird, kann die erfindungsgemäße zusätzliche Funktionalität der Detektion defekter oder instabiler Radaufhängungen ohne zusätzlichen Aufwand durchgeführt werden. In den meisten Fällen ist lediglich die Software bestehender Systeme zur Achsvermessung anzupassen. Insbesondere kann ein Schnellannahmekonzept, bei dem Kunden durch eine Schnelluntersuchung auf mögliche Reparaturaufgaben ihres Fahrzeugs aufmerksam gemacht werden, auf der Basis eines berührungslosen Achsmesssystems leicht um die Detektion möglicher Radaufhängungsschäden erweitert werden.

Zur Durchführung des Verfahren kann das Fahrzeug manuell oder mit Hilfe einer entsprechenden Schiebevorrichtung geschoben oder mit seiner eigener Kraft, d.h. motorgetrieben, an der Vorrichtung vorbei gefahren werden. Wichtig ist dabei, dass die Bestimmung der Drehachse des Rades bei belasteten Rädern des Fahrzeugs erfolgt. Eine Bestimmung Raddrehachse bei entlasteten Rädern, d.h. im angehobenen Zustand des Fahrzeugs, kann aufgrund des mangelnden Drucks auf die Radaufhängung zu fehlerhaften Resultaten führen.

In einer Ausführungsform schließt das Verfahren ein, wenigstens ein Messtarget an wenigstens einem Rad des Fahrzeugs zu montieren und das Messtarget optisch zu erfassen, um das Rotationszentrum und die Bewegungstrajektorie p(t) des Rotationszentrums zu bestimmen. Definierte Messtargets, die insbesondere reflektierende Messmarken aufweisen können, sind besonders gut optisch zu erfassen und ermöglichen es daher, das Verfahren besonders effektiv und mit hoher Zuverlässigkeit durchzuführen.

Ein Ausführungsbeispiel der Erfindung wird im Folgenden anhand der beigefügten Figuren erläutert, dabei zeigt:
Fig. 1 eine schematische Ansicht eines Ausführungsbeispiels einer erfindungsgemäßen Vorrichtung zum Überprüfen der Radaufhängung eines Fahrzeugs;
Fig. 2 eine schematische Ansicht eines mit einem Messtarget ausgestatteten Rades;
Fig. 3 eine Projektion der Bewegungsortskurve der Radnormalen in Bezug auf einen idealen Kreis bei intakter Radaufhängung; und
Fig. 4 eine Projektion der Bewegungsortskurve der Radnormalen in Bezug auf einen idealen Kreis bei defekter Radaufhängung.

### Figurenbeschreibung

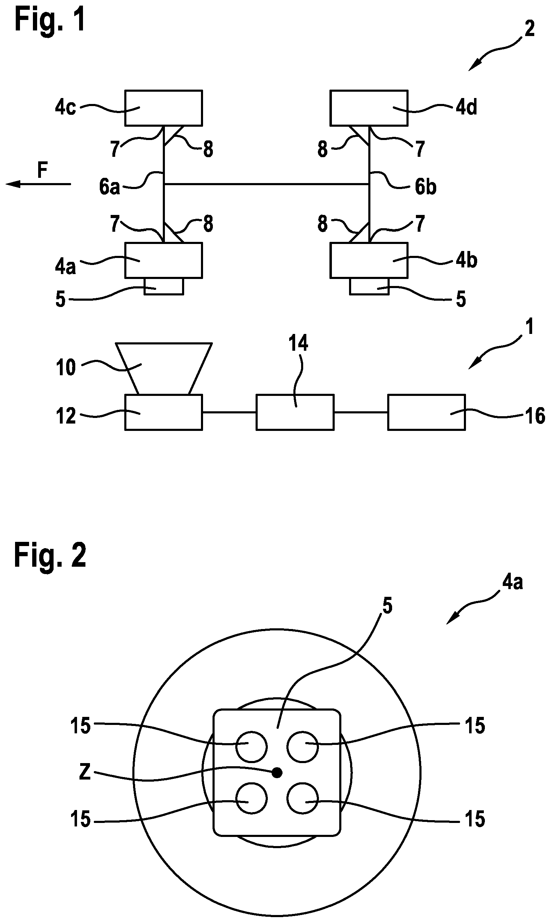

Fig. 1 zeigt eine schematische Ansicht eines Ausführungsbeispiels einer erfindungsgemäßen Vorrichtung 1 zum Überprüfen der Radaufhängung eines Fahrzeugs 2.

Das Fahrzeug 2 umfasst vier Räder 4a, 4b, 4c, 4d, jeweils zwei an einer Vorderachse 6a und an einer Hinterachse 6b des Fahrzeugs 2, wobei die Räder 4a, 4b, 4c, 4d jeweils über ein Gelenk 7 und einen Querlenker 8 an der jeweiligen Achse 6a, 6b befestigt sind.

An den Rädern 4a, 4b auf der in Fahrtrichtung F linken Seite des Fahrzeugs 2 ist auf der Außenseite des Fahrzeugs 2 jeweils ein Messtarget 5 derart angebracht, das es sich gemeinsam mit dem jeweiligen Rad 4a, 4b bewegt und insbesondere gemeinsam mit dem Rad 4a, 4b rotiert.

Eine erfindungsgemäße Vorrichtung 1 umfasst eine Bildaufnahmevorrichtung 10, die ausgebildet ist, Bilder eines Fahrzeugs 2, das an der Bildaufnahmevorrichtung 10 vorbeibewegt wird, insbesondere der Räder 4a, 4b des Fahrzeugs 2 bzw. Bilder von an den Rädern 4a, 4b angebrachten Messtargets 5, aufzunehmen und einer Bildauswertevorrichtung 12 zuzuführen. Die Bildauswertevorrichtung 12 ist ausgebildet, aus den von der Bildaufnahmevorrichtung 10 aufgenommenen Bildern das Rotationszentrum Z des an der Bildaufnahmevorrichtung 10 vorbeirollenden Rades 4a, 4b des Fahrzeugs 2 und die Bewegungstrajektorie p(t) des Rotationszentrums Z zu bestimmen.

Die erfindungsgemäße Vorrichtung 1 umfasst auch eine Vergleichs- und Auswertevorrichtung 14, die ausgebildet ist, die von der Bildaufnahmevorrichtung 12 erfasste Bewegungstrajektorie p(t) des Rotationszentrums Z eines Rades 4a, 4b mit einer vorgegebenen Bewegungstrajektorie K, die insbesondere vom Typ des Fahrzeugs 2 bzw. des Rades 4a, 4b abhängig sein kann, zu vergleichen und dabei insbesondere eine Abweichung zwischen der am Fahrzeug 2 real erfassten Bewegungstrajektorie p(t) und der vorgegebenen Bewegungstrajektorie K quantitativ zu bestimmen, um eine Ausgabevorrichtung 16, die ebenfalls Bestandteil einer erfindungsgemäßen Vorrichtung 1 ist, derart anzusteuern, dass sie eine Fehlermeldung, die beispielsweise eine optische und/oder eine akustische Fehlermeldung sein kann, ausgibt, wenn die auf diese Weise bestimmte Abweichung der erfassten Bewegungstrakektorie p(t) von der vorgegebenen Bewegungstrakektorie K einen vorgegebenen Grenzwert überschreitet.

Das Fahrzeug 2 kann von wenigstens einer Person manuell an der Bildaufnahmevorrichtung 10 vorbeigeschoben oder mit eigener (Motor-)Kraft an der Bildaufnahmevorrichtung 10 vorbeigefahren werden. Es kann auch eine in der Fig. 1 nicht gezeigte Schiebevorrichtung vorgesehen sein, die ausgebildet ist, das Fahrzeug 2 an der Bildaufnahmevorrichtung 10 vorbeizubewegen. Dabei ist darauf zu achten, dass die Räder 4a, 4b, 4c, 4d des Fahrzeugs 2 belastet sind und auf dem Boden bzw. auf dem Boden angebrachten Führungsschienen, die in der Figur 1 nicht gezeigt sind, abrollen.

Fig. 2 zeigt schematisch die Ansicht eines Rades 4a des Kraftfahrzeugs 2, wie es von der Bildaufnahmevorrichtung 10 erfasst wird.

An der Felge des Rades 4a ist ein Messtarget 5 in Form einer Messtafel derart befestigt, dass es gemeinsam mit dem Rad 4a um ein Rotationszentrum Z rotiert. Auf dem Messtarget 5 sind mehrere Messmarken 15, die insbesondere als reflektierende Messmarken 15 ("Retroreflexmarken") ausgebildet sind, vorgesehen, die es der Bildaufnahmevorrichtung 10 ermöglichen, die Abrollbewegung des Rades 4a optimal zu erfassen.

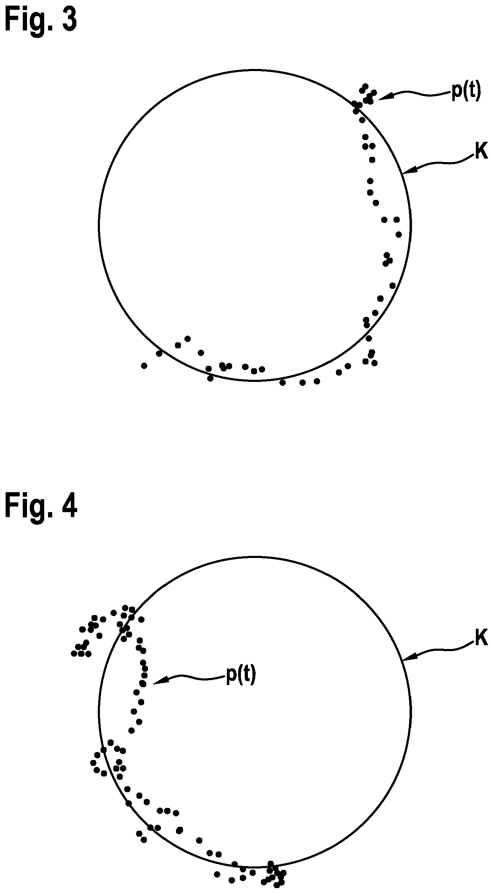

Fig. 3 zeigt die Projektion von Punkten der Bewegungstrajektorie p(t) der Radnormalen und die im Idealfall erwartete optimale Kreisbahn K für den Fall einer intakten Radaufhängung 7, 8.

Fig. 4 zeigt die Projektion von Punkten der Bewegungstrajektorie p(t) der Radnormalen in Bezug auf die im Idealfall zu erwartende Kreisbahn K für den Fall eines defekten Querlenkers 7.

In den Figuren 3 und 4 ist gut zu erkennen, dass die Punkte der Bewegungstrajektorie p(t) der Radnormalen im Falle eines defekten Querlenkers 7 (Fig. 4) im Mittel eine deutlich größere Abweichung von der idealen Kreisbahn K aufweist, als im Falle eines intakten Querlenkers (Fig. 3).

Durch quantitatives Bestimmen der mittleren Abweichung der Punkte der Bewegungstrajektorie p(t) von der vorgegebenen idealen Kreisbahn K kann ein Maß der Abweichung bestimmt werden, das mit einem für den jeweiligen Fahrzeugtyp vorgegebenen Grenzwert verglichen werden kann, um eine Beschädigung der Radaufhängung zu erkennen .

Um die Abweichung quantitativ bestimmen zu können, kann das Verfahren einschließen, die Summe der Abstände der Punkte der Bewegungstrajektorie p(t) von der (idealen) Kreisbahn K zu bestimmen und eine Fehlermeldung auszugeben, wenn die Summe der Abweichungen aller Punkte einen vorgegebenen Grenzwert überschreitet.

Alternativ oder zusätzlich kann die Anzahl der Punkte p(t), die mehr als einen vorgegebenen Abstand von dem Kreis K haben, bestimmt werden, um eine Fehlermeldung auszugeben, wenn die Anzahl dieser Punkte einen vorgegebenen Grenzwert überschreitet.

Das Verfahren kann auch einschließen, eine Passkurve, die durch alle Punkte der Zykloide p(t) verläuft, zu bestimmen, die Krümmung der Passkurve zu ermitteln und mit der Krümmung des Kreises K zu vergleichen, um eine Fehlermeldung auszugeben, wenn die Differenz zwischen der Krümmung der Passkurve und der Krümmung des Kreises K einen vorgegebenen Grenzwert überschreitet.

In einer erweiterten Ausführungsform kann aus der Quantität und/oder der Qualität der Abweichung auf die Art des Fehlers des Radaufhängung 7, 8 geschlossen werden, und dem Nutzer können entsprechende Informationen und Vorschläge für weitere Diagnose- bzw. Reparaturschritte unterbreitet werden.

## Patentansprüche

1. Verfahren zum Überprüfen der Radaufhängung (7, 8) eines Fahrzeugs (2), insbesondere eines Kraftfahrzeugs (2), **dadurch gekennzeichnet, dass** das Verfahren die folgenden Schritte umfasst:
(A) Bestimmen der Radnormalen und/oder des Rotationszentrums (Z) wenigstens eines Rades (4a, 4b) des Fahrzeugs (2);
(B) Bewegen des Fahrzeugs (2) und Erfassen von Punkten der Bewegungstrajektorie (p(t)) der Radnormalen und/oder des Rotationszentrums (Z) wenigstens eines Rades (4a, 4b) bei der Bewegung des Fahrzeugs (2);
**gekennzeichnet durch**
(C) Bestimmen der Abweichung der im Schritt (B) bestimmten Bewegungstrajektorie (p(t)) der Radnormalen und/oder des Rotationszentrums (Z) von einer vorgegebenen Bewegungstrajektorie (p(t)); und
(D) Ausgeben einer Fehlermeldung, wenn die Abweichung einen vorgegebenen Grenzwert überschreitet.

2. Verfahren nach Anspruch 1, wobei das Verfahren einschließt, das Fahrzeug (2) im Schritt (B) mit Muskelkraft oder maschinell zu schieben.

3. Verfahren nach Anspruch 1, wobei das Verfahren einschließt, das Fahrzeug (2) im Schritt (B) mit der Kraft seines Motors zu bewegen.

4. Verfahren nach einem der vorangehenden Ansprüchen, wobei das Verfahren einschließt, wenigstens ein Messtarget (5) an wenigstens einem Rad (4a, 4b) des Fahrzeugs (2) zu montieren und das Messtarget (5) optisch zu erfassen, um die Radnormale und/oder das Rotationszentrum (Z) und die Bewegungstrajektorie (p(t)) der Radnormalen bzw. des Rotationszentrums (Z) zu bestimmen.

5. Verfahren nach einem der vorangehenden Ansprüche, wobei das Verfahren einschließt, einen Kreis (K) zu konstruieren, der im Mittel den geringstmöglichen Abstand von den erfassten Punkten (p(Tᵢ)) der Bewegungstrajektorie (p(t)) aufweist.

6. Verfahren nach Anspruch 5, wobei das Verfahren einschließt, die Summe der Abstände der Punkte (p(Tᵢ)) der Bewegungstrajektorie (p(t)) von dem Kreis (K) und/oder die Anzahl der Punkte (p(Tᵢ)) der Bewegungstrajektorie (p(t)), die mehr als einen vorgegebenen Abstand von dem Kreis (K) haben, zu bestimmen und eine Fehlermeldung auszugeben, wenn die Summe und/oder die Anzahl der Punkte einen vorgegebenen Grenzwert überschreitet.

7. Verfahren nach Anspruch 5, wobei das Verfahren einschließt,
eine Passkurve, die durch alle Punkte (p(Tᵢ)) der Bewegungstrajektorie (p(t)) verläuft, zu bestimmen;
die Krümmung der Passkurve zu bestimmen und mit der Krümmung des Kreises (K) zu vergleichen; und
eine Fehlermeldung auszugeben, wenn die Differenz zwischen der Krümmung der Passkurve und der Krümmung des Kreises (K) den vorgegebenen Grenzwert überschreitet.

8. Verfahren nach einem der vorangehenden Ansprüchen, wobei das Verfahren einschließt, aus der Art und/oder dem Ausmaß der Abweichung der im Schritt (B) bestimmten Bewegungstrajektorie (p(t)) der Radnormalen und/oder des Rotationszentrums (Z) von einer vorgegebenen Bewegungstrajektorie auf die Art des Fehlers der Radaufhängung (7, 8) zu schließen.

9. Vorrichtung zum Überprüfen der Radaufhängung (7, 8) eines Fahrzeugs (2), insbesondere eines Kraftfahrzeugs (2), **dadurch gekennzeichnet, dass** die Vorrichtung aufweist:
(a) eine Vorrichtung (10, 12), die zum Bestimmen der Radnormalen und/oder des Rotationszentrums (Z) eines Rades (4a, 4b) des Fahrzeugs (2) ausgebildet ist;
(b) eine Vorrichtung (10, 12), die zum Erfassen der Bewegungstrajektorie (p(t)) der Radnormalen und/oder des Rotationszentrums (Z) des Rades (4a, 4b) bei einer Bewegung des Fahrzeugs (2) ausgebildet ist;
**gekennzeichnet durch**
(c) eine Vergleichs- und Auswertevorrichtung (14), die ausgebildet ist, um die erfasste Bewegungstrajektorie (p(t)) der Radnormalen und/oder des Rotationszentrums (Z) des Rades (4a, 4b) mit einer vorgegebenen Bewegungstrajektorie (K) zu vergleichen und eine Fehlermeldung auszugeben, wenn die Abweichung der erfassten Bewegungstrajektorie (p(t)) von der vorgegebenen Bewegungstrajektorie (K) einen vorgegebenen Grenzwert überschreitet.

10. Vorrichtung nach Anspruch 9, wobei die Vorrichtung (10, 12) zum Bestimmen der Radnormalen und/oder des Rotationszentrums (Z) eines Rades (4a, 4b) des Fahrzeugs (2) und/oder die Vorrichtung zum Erfassen der Bewegungstrajektorie (p(t)) der Radnormalen und/oder des Rotationszentrums (Z) des Rades (4a, 4b) ausgebildet sind, das Rad (4a, 4b) und/oder ein am Rad (4a, 4b) montiertes Messtarget (5) optisch zu erfassen.

## Claims

1. Method for checking the wheel suspension (7, 8) of a vehicle (2), in particular a motor vehicle (2), **characterized in that** the method includes the following steps:
(A) determining the wheel normal and/or the centre of rotation (Z) of at least one wheel (4a, 4b) of the vehicle (2);
(B) moving the vehicle (2) and capturing points of the movement trajectory (p(t)) of the wheel normal and/or of the centre of rotation (Z) of at least one wheel (4a, 4b) during the movement of the vehicle (2);
**characterized by**
(C) determining the deviation of the movement trajectory (p(t)), determined in step (B), of the wheel normal and/or of the centre of rotation (Z) from a predetermined movement trajectory (p(t)); and
(D) outputting an error message if the deviation exceeds a predetermined threshold.

2. Method according to Claim 1, wherein the method includes pushing the vehicle (2) by muscle power or by machine in step (B).

3. Method according to Claim 1, wherein the method includes moving the vehicle (2) under the power of its motor in step (B).

4. Method according to any one of the preceding claims, wherein the method includes mounting at least one measurement target (5) at at least one wheel (4a, 4b) of the vehicle (2) and capturing the measurement target (5) optically in order to determine the wheel normal and/or the centre of rotation (Z) and the movement trajectory (p(t)) of the wheel normal and/or of the centre of rotation (Z).

5. Method according to any one of the preceding claims, wherein the method includes constructing a circle (K) which, on average, has the smallest possible distance from the captured points (p(Tᵢ)) of the movement trajectory (p(t)).

6. Method according to Claim 5, wherein the method includes determining the sum of the distances of the points (p(Tᵢ)) of the movement trajectory (p(t)) from the circle (K) and/or the number of points (p(Tᵢ)) of the movement trajectory (p(t)) that are at more than a predetermined distance from the circle (K), and outputting an error message if the sun and/or the number of points exceeds a predetermined threshold.

7. Method according to Claim 5, wherein the method includes
determining a fitted curve which runs through all points (p(Tᵢ)) of the movement trajectory (p(t));
determining the curvature of the fitted curve and comparing said curvature to the curvature of the circle (K); and
outputting an error message if the difference between the curvature of the fitted curve and the curvature of the circle (K) exceeds the predetermined threshold.

8. Method according to any one of the preceding claims, wherein the method includes deducing the type of error of the wheel suspension (7, 8) from the type and/or the extent of the deviation of the movement trajectory (p(t)), determined in step (B), of the wheel normal and/or of the centre of rotation (Z) from a predetermined movement trajectory.

9. Apparatus for checking the wheel suspension (7, 8) of a vehicle (2), in particular a motor vehicle (2), **characterized in that** the apparatus has:
(a) an apparatus (10, 12) that is embodied to determine the wheel normal and/or the centre of rotation (Z) of a wheel (4a, 4b) of the vehicle (2);
(b) an apparatus (10, 12) that is embodied to capture the movement trajectory (p(t)) of the wheel normal and/or of the centre of rotation (Z) of the wheel (4a, 4b) during a movement of the vehicle (2);
**characterized by**
(c) a comparison and evaluation apparatus (14) that is embodied to compare the captured movement trajectory (p(t)) of the wheel normal and/or of the centre of rotation (Z) of the wheel (4a, 4b) to a predetermined movement trajectory (K) and to output an error message if the deviation of the captured movement trajectory (p(t)) from the predetermined movement trajectory (K) exceeds a predetermined threshold.

10. Apparatus according to Claim 9, wherein the apparatus (10, 12) for determining the wheel normal and/or the centre of rotation (Z) of a wheel (4a, 4b) of the vehicle (2) and/or the apparatus for capturing the movement trajectory (p(t)) of the wheel normal and/or of the centre of rotation (Z) of the wheel (4a, 4b) is/are embodied to optically capture the wheel (4a, 4b) and/or a measurement target (5) mounted to the wheel (4a, 4b).

## Revendications

1. Procédé de vérification de la suspension (7, 8) des roues d'un véhicule (2), notamment d'un véhicule automobile (2), le procédé comportant les étapes qui consistent à :
(A) déterminer la normale et/ou le centre de rotation (Z) d'au moins une roue (4a, 4b) du véhicule (2),
(B) déplacer le véhicule (2) et saisir des points de la trajectoire de déplacement (p(t)) de la normale ou du centre de rotation (Z) d'au moins une roue (4a, 4b) lors du déplacement du véhicule (2),
**caractérisé par** les étapes qui consistent à
(C) déterminer l'écart entre la trajectoire de déplacement (p(t)) de la normale ou du centre de rotation (Z) et une trajectoire de déplacement (p(t)) prédéterminée et
(D) délivrer un message d'erreur si l'écart dépasse une valeur limite prédéterminée.

2. Procédé selon la revendication 1, qui inclut le déplacement du véhicule (2) à l'étape (B) par la force musculaire ou par machine.

3. Procédé selon la revendication 1, qui inclut le déplacement du véhicule (2) à l'étape (B) par la force de son moteur.

4. Procédé selon l'une des revendications précédentes, qui inclut les étapes qui consistent à monter au moins une cible de mesure (5) sur au moins une roue (4a, 4b) du véhicule (2) et à saisir optiquement la cible de mesure (5) pour déterminer la normale et/ou le centre de rotation (Z) de la ou des roues et la trajectoire de déplacement (p(t)) de leur normale ou de leur centre de rotation (7).

5. Procédé selon l'une des revendications précédentes, qui inclut l'étape qui consiste à construire un cercle (K) qui présente en moyenne la plus petite distance possible par rapport aux points (p(Tᵢ)) saisis de la trajectoire de déplacement (p(t)).

6. Procédé selon la revendication 5, qui inclut l'étape qui consiste à déterminer la somme des distances des points (p(Tᵢ)) de la trajectoire de déplacement (p(t)) du cercle (K) et/ou le nombre des points (p(Tᵢ)) de la trajectoire de déplacement (p(t)) qui ont une distance supérieure à une distance prédéterminée par rapport au cercle (K) et à délivrer un message d'erreur si la somme et/ou le nombre des points dépassent une valeur limite prédéterminée.

7. Procédé selon la revendication 5, qui inclut les étapes qui consistent à
déterminer une courbe d'adaptation qui passe par tous les points (p(Tᵢ)) de la trajectoire de déplacement (p(t)),
déterminer la courbure de la courbe d'adaptation et la comparer à la courbure du cercle (K) et
délivrer un message d'erreur si la différence entre la courbure de la courbe d'adaptation et la courbure du cercle (K) dépasse la valeur limite prédéterminée.

8. Procédé selon l'une des revendications précédentes, qui inclut l'étape qui consiste à conclure sur la nature du défaut de la suspension (7, 8) des roues à partir de la nature et/ou de l'amplitude de l'écart de la trajectoire de déplacement (p(t)) déterminée à l'étape (B) de la normale et/ou du centre de rotation (Z) des roues par rapport à une trajectoire de déplacement prédéterminée.

9. Ensemble de vérification de la suspension (7, 8) des roues d'un véhicule (2), en particulier d'un véhicule automobile (2), **caractérisé en ce que** le dispositif présente :
(a) un ensemble (10, 12) configuré pour déterminer la normale et/ou le centre de rotation (Z) d'au moins une roue (4a, 4b) du véhicule (2),
(b) un ensemble (10, 12) configuré pour saisir des points de la trajectoire de déplacement (p(t)) de la normale ou du centre de rotation (Z) d'au moins une roue (4a, 4b) lors d'un déplacement du véhicule (2), **caractérisé par**
(c) un ensemble (14) de comparaison et d'évaluation configuré pour comparer à une trajectoire de déplacement (K) prédéterminée la trajectoire de déplacement (p(t)) de la normale ou du centre de rotation (Z) qui a été saisie et pour délivrer un message d'erreur si l'écart entre la trajectoire de déplacement (p(t)) qui a été saisie et la trajectoire de déplacement (K) prédéterminée dépasse une valeur limite prédéterminée.

10. Ensemble selon la revendication 9, dans lequel l'ensemble (10, 12) de détermination de la normale et/ou du centre de rotation (Z) d'une roue (4a, 4b) du véhicule (2) et/ou l'ensemble de détection de la trajectoire de déplacement (p(t)) de la normale et/ou du centre de rotation (Z) de la roue (4a, 4b) sont configurés pour saisir optiquement la roue (4a, 4b) et/ou une cible de mesure (5) montée sur la roue (4a, 4b).
